# EUROPEAN PATENT SPECIFICATION

(11) **EP 2 470 035 B1**
(45) Date of publication and mention of the grant of the patent: **28.12.2016**
(21) Application number: 10757868.4
(22) Date of filing: 27.07.2010
(51) Int. Cl.: A41D 31/00, B32B 5/26, B32B 5/02

(54) **INSULATED COMPOSITE FABRIC**
ISOLIERTER VERBUNDSTOFF
TISSU COMPOSITE ISOLÉ

(30) Priority: 24.11.2009 US 263960 P; 13.05.2010 US 334248 P; 17.06.2010 US 817756
(43) Date of publication of application: 04.07.2012
(60) Divisional application: 16197225.2
(73) Proprietor: MMI-IPCO, LLC, Lawrence, MA 01842 (US)
(72) Inventor: ROCK, Moshe, Brookline Massachusetts 02446 (US); ZEIBA, James, Derry New Hampshire 03038 (US); VAINER, Gadalia, Melrose Massachusetts 02176 (US); HUNTER, Jane, Manassas Virginia 20111 (US); HARYSLAK, Charles, Groveland Massachusetts 01834 (US); COSTELLO, David, Marblehead Massachusetts 01945 (US); FLAVIN, Shawn, Sandown New Hampshire 03873 (US); WEBSTER, Marcus, Pelham New Hampshire 03076 (US)
(74) Representative: Peterreins Schley
(86) International application number: PCT/US2010/043367
(87) International publication number: WO 2011/066000

(56) References cited:
- EP-A1- 1 306 475
- DE-U1- 29 505 761
- US-A1- 2004 132 367
- US-A1- 2006 234 573
- US-A1- 2007 218 792

## Description

### TECHNICAL FIELD

This invention relates to insulated composite fabrics that incorporate a textile fabric with raised surface on one side or both sides as an insulating filler material.

### BACKGROUND

Conventional down fabric constructions often include nonwoven filler material enclosed between two woven fabric "shell" layers. These nonwoven filler materials are known to provide a relatively high level of thermal insulation, and are lightweight with very good packability.

Some known nonwoven filler materials, such as Primaloft^{®}, available from Albany International Corp, and Thinsulate™, available from 3M Company, are prone to movement and fibers of the nonwoven filler material often have a tendency to protrude through the woven fabric layers. To inhibit this fiber migration, it is known to quilt the filler material to one or both of the woven fabric layers. The quilting, however, tends to flatten the nonwoven filler material, and, as a result, can reduce the thermal insulation of the fabric construction. The quilting may also inhibit the fabric construction from stretching.

To inhibit migrating fibers from protruding through the woven fabric layers, the woven fabric layers are often made of a very tight construction with an air permeability of less than 5.1 L/m²/sec at 125 Pa [less than 1.0 ft³/ft²/min] and, in many cases, close to zero L/m²/sec at 125 Pa [close to zero ft³/ft²/min]. In some cases, the woven fabric is calendared, being passed through heated rolls under high pressure, to seal voids in the tight woven construction. In certain circumstances, a chemical system is applied to the woven fabric prior to calendaring to help seal voids in the woven fabric. This type of sealing may reduce the air permeability of the fabric construction to almost zero L/m²/sec at 125 Pa [almost zero ft³/ft²/min]. As a result, a garment made from the resulting fabric constructions may have reasonable insulation, but poor air permeability and, as a result, low breathability.

Nonwoven filler materials also tend to flatten under compression and as a result may exhibit a loss in thermal insulation.

US 2006/0234573 A1 discloses a chemical protective fabric garment system that consists of a knit thermal fabric layer formed of synthetic yarns or fibers with embedded particles of activated carbon and an inner knit layer formed of one or more yams made of fibers carrying activated carbon particles. The first knit thermal fabric layer has at least one raised surface with a large surface area and high three-dimensional bulk. The inner knit layer has an inner surface, towards a wearer's skin, brushed for increased surface area to provide enhanced absorption and reduced touching points upon the skin.

US 2004/0132367 A1 describes a multi-layered garment system including a primary garment including a thermal layer with at least one raised surface and an outer shell garment including a body constructed of a tightly woven fabric. The shell fabric is breathable, water repellent, and wind resistant. The body of the shell has an upper portion and a lower portion. The thermal layer can have channels within a pile layer.

### SUMMARY

The invention relates to an insulated composite fabric as defined in claim 1 and a fabric garment as defined in claim 16. The dependent claims define preferred embodiments of the insulated composite fabric.

The insulated composite fabrics of the invention incorporate a textile fabric with raised surface on one side or both sides as an insulating filler material.

One aspect of the invention provides an insulated composite fabric that includes an inner fabric layer, an outer fabric layer, and an insulating-filler fabric layer enclosed between the inner fabric layer and the outer fabric layer. The insulating-filler fabric layer is a textile fabric with a raised surface on at least one side of the fabric. The insulating-filler fabric layer has a pile surface including a plurality of discrete regions of no pile interspersed among regions of pile and a plurality of first discrete regions having a first pile height interspersed among a plurality of other discrete regions having contrasting pile height relatively greater than the first pile height.

Implementations of this aspect may include one or more of the following additional features. The insulating-filler fabric layer includes a double face warp knit fabric. The double face warp knit fabric has a technical back having plush velvet surface, and a technical face having a velour surface. The insulating-filler fabric layer includes a double face knit fabric having reverse plaited terry sinker loop knit construction. The double face knit fabric has a technical face with a raised or napped surface, and a technical back with a cut loop or velour surface. The insulating-filler fabric layer includes a knit fabric having sliver knit construction. The insulating-filler fabric layer sinker loop fabric has a reverse plaited construction. A technical face of the terry sinker loop fabric has a napped finish and a technical back is left as un-napped, terry loop. A technical face of the terry sinker loop fabric is left un-napped and a technical back is left as un-napped, terry loop. The terry sinker loop fabric has a regular plaited construction. The insulating-filler fabric layer has a terry sinker loop surface including a plurality of discrete regions of no terry sinker loop interspersed among regions of terry sinker loop. The insulating-filler fabric layer includes a double face knit fabric having sliver knit construction. The insulating fabric layer has a weight of about 34 grams per square meter [1 ounce per square yard] to about 407 grams per square meter [12 ounces per square yard] (e.g., about 34 grams per square meter [1 ounce per square yard] to about 136 grams per square meter [4 ounces per square yard], about 102 grams per square meter [3 ounces per square yard] to about 271 grams per square meter [8 ounces per square yard], or about136 grams per square meter [4 ounces per square yard] to about 407 grams per square meter [12 ounces per square yard]). The insulating-filler fabric layer is quilted to one or both of the inner fabric layer and the outer fabric layer. The insulating-filler fabric layer is stitched to one or both of the inner fabric layer and the outer fabric layer along a periphery of the insulated composite fabric. The insulating-filler fabric layer is laminated to one or both of the inner fabric layer and the outer fabric layer. The insulating-filler fabric layer has a thickness (bulk) of about 0.25 cm [about 0.1 inch] to about 10.2 cm [about 4.0 inches] (e.g., about 0.25 cm [about 0.1 inch] to about 0.5 cm [about 0.2 inch], about 0.38 cm [about 0.15 inch] to about 1.0 cm [about 0.4 inch], about 0.5 cm [about 0.2 inch] to about 2.5 cm [about 1.0 inch], or about 7.6 cm [ about 3 inches] to about 10.2 cm [about 4.0 inches]). In some cases, yarns forming the first discrete regions are relatively finer that yarns forming the other discrete regions. In some examples, yarns forming the first discrete regions have a denier per filament (dpf) of less than 1.0 (where "denier" is a measure of mass in grams per 9,000 meters). The insulating-filler fabric layer provides insulation of about 0.2 clo per 33.9 grams per square meter [or per ounce per square yard] to about 1.6 clo per 33.9 grams per square meter [or per ounce per square yard] (where "clo" is a measure of the amount of insulation that will maintain normal skin temperature of the human body when heat production is 50 kilogram-calories per meter squared per hour, air temperature is 21°C [70°F], and the air is still). The insulating-filler fabric layer includes a hydrophobic fabric. The inner fabric layer includes a woven fabric. The inner fabric layer includes a knit fabric having a single jersey construction, a double knit construction, a warp knit construction, or a mesh construction. The inner fabric layer may have an air permeability that is different from an air permeability of the outer fabric layer. The inner fabric layer has an air permeability that is relatively greater than an air permeability of the outer fabric layer. The inner fabric layer has an air permeability that is relatively less than an air permeability of the outer fabric layer. In some cases, the inner fabric layer has an air permeability that is the same as the air permeability of the outer fabric layer. The inner fabric layer has an air permeability of about 25.4 L/m²/sec at 125 Pa to about 1,524 L/m²/sec at 125 Pa [about 5 ft³/ft²/min to about 300 ft³/ft²/min], tested according to ASTM D-737 under a pressure difference of 1.27cm H₂O (4°C) [½ inch of water] across the inner fabric layer. The outer fabric layer has an air permeability of about 5.1 L/m²/sec at 125 Pa to about 508 L/m²/sec at 125 Pa [about 1 ft³/ft²/min to about 100 ft³/ft²/min], (e.g., about 5.1 L/m²/sec at 125 Pa to about 508 L/m²/sec at 125 Pa [about 1 ft³/ft²/min to about 100 ft³/ft²/min], tested according to ASTM D-737 under a pressure difference of 1.27cm H2O (4°C) [½ inch of water]) across the outer fabric layer. In some cases, both the inner fabric layer and the outer fabric layer have very high air permeability (e.g., at least about 1,016 L/m²/sec at 125 Pa [200 ft³/ft²/min], tested according to ASTM D-737 under a pressure difference of 1.27cm H2O (4°C) [½ inch of water] across the respective fabric layer). The outer fabric layer includes a woven fabric. The insulated composite fabric has stretch in at least one direction. At least one of the outer fabric layer, the inner fabric layer, and the insulating-filler fabric layer includes fibers of stretch and/or elastomeric material. The stretch material includes elastomeric yarns and/or fibers (e.g., spandex yarns and/or fibers). The outer fabric layer is treated with durable water repellent, an abrasion resistant coating, camouflage, or infrared radiation reduction. The insulated composite fabric has an air permeability of about 5.1 L/m²/sec at 125 Pa to about 1,524 L/m²/sec at 125 Pa [about 1.0 ft³/ft²/min to about 300 ft³/ft²/min], tested according to ASTM D-737 under a pressure difference of 1.27cm H2O (4°C) [½ inch of water] across the insulated composite fabric (e.g., about 508 L/m²/sec at 125 Pa to about 1,524 L/m²/sec at 125 Pa [about 100 ft³/ft²/min to about 300 ft³/ft²/min]), tested according to ASTM D-737 under a pressure difference of 1.27cm H2O (4°C) [½ inch of water] across the insulated composite fabric, or about 5.1 L/m²/sec at 125 Pa to about 406.4 L/m²/sec at 125 Pa [about 1.0 ft³/ft²/min to about 80.0 ft³/ft²/min], tested according to ASTM D-737 under a pressure difference of 1.27cm H2O (4°C) [½ inch of water] across the insulated composite fabric). The insulating-filler fabric layer is constructed to include face yarn that is positioned generally perpendicular to stitching or backing yarn. The insulated composite fabric provides insulation of about 0.2 clo per 33.9 grams per square meter [or per ounce per square yard] to about 3.0 clo per 33.9 grams per square meter [or per ounce per square yard] (e.g., about 0.8 clo per 33.9 grams per square meter [or per ounce per square yard] to about 1.6 clo per 33.9 grams per square meter [or per ounce per square yard], about 1.0 clo per 33.9 grams per square meter [or per ounce per square yard] to about 1.8 clo per 33.9 grams per square meter [or per ounce per square yard], or about 1.0 clo per 33.9 grams per square meter [or per ounce per square yard] to about 3.0 clo per 33.9 grams per square meter [or per ounce per square yard]). At least one of the inner fabric layer, the outer fabric layer, and the insulating-filler fabric layer includes flame-retardant material or is treated to provide flame-retardance. The insulated composite fabric may also include a waterproof membrane that is laminated to an inner surface of the outer fabric layer, and which is disposed between the outer fabric layer and the insulating-filler fabric layer. The waterproof membrane may be a vapor permeable membrane. The waterproof membrane may be a porous hydrophobic membrane, a hydrophilic non-porous membrane, or an electrospun material.

Another aspect of the invention features a fabric garment that includes a first fabric portion formed of a first insulated composite fabric. The first insulated composite fabric includes a first inner fabric layer, a first outer fabric layer, and a first insulating-filler fabric layer enclosed between the first inner fabric layer and the first outer fabric layer. The first insulating-filler fabric layer is a textile fabric with a raised surface on at least one side of the fabric. The first insulating-filler fabric layer has a pile surface including a plurality of discrete regions of no pile interspersed among regions of pile.

Implementations of this aspect may include one or more of the following additional features. The first insulating-filler fabric layer includes a double face warp knit fabric. The double face warp knit fabric has a technical back having plush velvet surface, and a technical face having a velour surface. The first insulating-filler fabric layer includes a double face knit fabric having reverse plaited terry sinker loop knit construction. The double face knit fabric has a technical face with a raised or napped surface, and a technical back with a cut loop or velour surface. The first insulating-filler fabric layer includes a knit fabric having sliver knit construction. The first insulating-filler fabric layer includes a double face knit fabric having sliver knit construction. The first insulating-filler fabric layer includes a terry sinker loop fabric in which the terry loop is left un-raised. The terry sinker loop fabric has a reverse plaited construction. A technical face of the terry sinker loop fabric has a napped finish and a technical back is left as un-napped, terry loop. In some cases, a technical face of the terry sinker loop fabric is left un-napped and a technical back is left as un-napped, terry loop. The terry sinker loop fabric has a regular plaited construction. The first insulating-filler fabric layer has a terry sinker loop surface including a plurality of discrete regions of no terry sinker loop interspersed among regions of terry sinker loop. The first insulating-filler fabric layer has a weight of about 34 grams per square meter [1 ounce per square yard] to about 407 grams per square meter [12 ounces per square yard] (e.g., about 34 grams per square meter [1 ounce per square yard] to about 136 grams per square meter [4 ounces per square yard], about 102 grams per square meter [3 ounces per square yard] to about 271 grams per square meter [8 ounces per square yard], or about136 grams per square meter [4 ounces per square yard] to about 407 grams per square meter [12 ounces per square yard]). The first insulating-filler fabric layer is quilted to one or both of the first inner fabric layer and the first outer fabric layer. The first insulating-filler fabric layer is anchored at seams connecting the first inner fabric layer and the first outer fabric layer. The first insulating-filler fabric layer is laminated to one or both of the first inner fabric layer and the first outer fabric layer. In some examples, yarns forming the first discrete regions are relatively finer that yarns forming the other discrete regions. In some cases, yarns forming the first discrete regions have a denier per filament (dpf) of less than 1.0. The first insulating-filler fabric layer provides insulation of about 0.2 clo per 33.9 grams per square meter [or per ounce per square yard] to about 1.6 clo per 33.9 grams per square meter [or per ounce per square yard]. The first insulating-filler fabric layer includes a hydrophobic fabric. The first inner fabric layer includes a woven fabric. The first inner fabric layer includes a knit fabric having a single jersey construction, a double knit construction, a warp knit construction, or a mesh construction. The first inner fabric layer may have an air permeability that is different from an air permeability of the first outer fabric layer. The first inner fabric layer has an air permeability that is relatively greater than an air permeability of the first outer fabric layer. The first inner fabric layer has an air permeability that is relatively less than an air permeability of the first outer fabric layer. In some cases, the first inner fabric layer has an air permeability that is the same as the air permeability of the first outer fabric layer. The first inner fabric layer has an air permeability of about 25.4 L/m2/sec at 125 Pa to about 1,524 L/m2/sec at 125 Pa [about 5 ft3/ft2/min to about 300 ft3/ft2/min], tested according to ASTM D-737 under a pressure difference of 1.27cm H2O (4°C) [½ inch of water] across the inner fabric layer. The first outer fabric layer has an air permeability of about 5.1 L/m²/sec at 125 Pa to about 508 L/m2/sec at 125 Pa [about 1 ft3/ft2/min to about 100 ft3/ft2/min], (e.g., about 5.1 L/m2/sec at 125 Pa to about 508 L/m2/sec at 125 Pa [about 1 ft3/ft2/min to about 100 ft3/ft2/min], tested according to ASTM D-737 under a pressure difference of 1.27cm H2O (4°C) [½ inch of water]) across the outer fabric layer. The first outer fabric layer includes a woven fabric. The first insulated composite fabric has stretch in at least one direction. At least one of the first outer fabric layer, the first inner fabric layer, and the first insulating-filler fabric layer includes fibers of stretch and/or elastomeric material (e.g., elastomeric yarns and/or fibers, e.g., spandex yarns and/or fibers). The first outer fabric layer is treated with durable water repellent, an abrasion resistant coating, camouflage, or infrared radiation reduction. The first insulated composite fabric has an air permeability of about 5.1 L/m²/sec at 125 Pa to about 406.4 L/m²/sec at 125 Pa [about 1.0 ft3/ft2/min to about 80 ft3/ft2/min], tested according to ASTM D-737 under a pressure difference of 1.27cm H2O (4°C) [½ inch of water] across the first insulated composite fabric (e.g., about 20.3 L/m2/sec at 125 Pa to about 101.6 L/m2/sec at 125 Pa [about 4.0 ft³/ft²/min to about 20.0 ft3/ft2/min]), tested according to ASTM D-737 under a pressure difference of 1.27cm H2O (4°C) [½ inch of water] across the insulated composite fabric, or about 5.1 L/m2/sec at 125 Pa to about 406.4 L/m2/sec at 125 Pa [about 1.0 ft3/ft2/min to about 80.0 ft3/ft2/min], tested according to ASTM D-737 under a pressure difference of 1.27cm H2O (4°C) [½ inch of water] across the first insulated composite fabric). The fabric garment also includes a second fabric portion, and the first and second fabric portions have one or more contrasting properties selected from contrasting stretch, contrasting water resistance, contrasting insulative properties, and contrasting air permeability. The second fabric portion is formed of a second insulated composite fabric. The second insulated composite fabric includes a second inner fabric layer, a second outer fabric layer, and a second insulating-filler fabric layer enclosed between the second inner fabric layer and the second outer fabric layer. The second insulated composite fabric has an air permeability that is different from, and greater than, an air permeability of the first insulated composite fabric. The second insulating-filler fabric layer is a textile fabric with a raised surface on at least one side of the fabric. The second insulating-filler fabric layer includes a double face warp knit fabric. The double face warp knit fabric has a technical back having plush velvet surface, and a technical face having a velour surface. The second insulating-filler fabric layer includes a double face knit fabric having reverse plaited terry sinker loop knit construction. The double face knit fabric has a technical face with a raised or napped surface, and a technical back with a cut loop or velour surface. The second insulating-filler fabric layer includes a knit fabric having sliver knit construction. The second insulating-filler fabric layer includes a double face knit fabric having sliver knit construction. The second insulating-filler fabric layer includes a terry sinker loop fabric in which the terry loop is left un-raised. The terry sinker loop fabric has a reverse plaited construction. A technical face of the terry sinker loop fabric has a napped finish and a technical back is left as un-napped, terry loop. A technical face of the terry sinker loop fabric is left un-napped and a technical back is left as un-napped, terry loop. The terry sinker loop fabric has a regular plaited construction. The second insulating-filler fabric layer has a terry sinker loop surface including a plurality of discrete regions of no terry sinker loop interspersed among regions of terry sinker loop.

The second insulating fabric layer has a weight of about 34 grams per square meter [1 ounce per square yard] to about 407 grams per square meter [12 ounces per square yard] (e.g., about 34 grams per square meter [1 ounce per square yard] to about 136 grams per square meter [4 ounces per square yard], about 102 grams per square meter [3 ounces per square yard] to about 271 grams per square meter [8 ounces per square yard], or about136 grams per square meter [4 ounces per square yard] to about 407 grams per square meter [12 ounces per square yard]). The second insulating-filler fabric layer is quilted to one or both of the second inner fabric layer and the second outer fabric layer. The second insulating-filler fabric layer is anchored at seams connecting the second inner fabric layer and the second outer fabric layer. The second insulating-filler fabric layer is laminated to one or both of the second inner fabric layer and the second outer fabric layer. The second insulating-filler fabric layer has a pile surface including a plurality of discrete regions of no pile interspersed among regions of pile. In some cases, the second insulating-filler fabric layer has a pile surface that includes a plurality of first discrete regions having a first pile height interspersed among a plurality of other discrete regions having contrasting pile height relatively greater than the first pile height. In some examples, yarns forming the first discrete regions are relatively finer that yarns forming the other discrete regions. In some cases, yarns forming the first discrete regions have a denier per filament (dpf) of less than 1.0. The second insulating-filler fabric layer provides insulation of about 0.2 clo per 33.9 grams per square meter [or per ounce per square yard] to about 1.6 clo per 33.9 grams per square meter [or per ounce per square yard]. The second insulating-filler fabric layer comprises a hydrophobic fabric. The second inner fabric layer includes a woven fabric. The second inner fabric layer includes a knit fabric having a single jersey construction, a double knit construction, a warp knit construction, or a mesh construction. The second outer fabric layer includes a woven fabric. The second insulated composite fabric has stretch in at least one direction. At least one of the second outer fabric layer, the second inner fabric layer, and the second insulating-filler fabric layer includes fibers of stretch and/or elastomeric material. The elastomeric material includes elastomeric yarns and/or fibers (e.g., spandex yarns and/or fibers). The second outer fabric layer is treated with durable water repellent, an abrasion resistant coating, camouflage, or infrared radiation reduction. The second insulated composite fabric has an air permeability of about 25.4 L/m²/sec at 125 Pa to about 1,524 L/m2/sec at 125 Pa [about 5 ft3/ft2/min to about 300 ft3/ft2/min], tested according to ASTM D-737 under a pressure difference of 1.27cm H2O (4°C) [½ inch of water] across the second insulated composite fabric. The second fabric portion is formed of a knit fabric having a single jersey construction, a double knit construction, or a rib knit construction. The second fabric portion is formed of a single layer fabric or a laminate composite fabric. The single layer fabric has a single jersey construction, a double knit construction, a rib knit construction, or a woven construction. The second fabric portion includes a woven fabric. The second fabric portion has an air permeability that is different from an air permeability of the first fabric portion. The second fabric portion has an air permeability that is relatively greater than an air permeability of the first fabric portion. The second fabric portion has an air permeability that is relatively less than an air permeability of the first fabric portion. The second fabric portion has an air permeability of about 25.4 L/m²/sec at 125 Pa to about 1,524 L/m²/sec at 125 Pa [about 5 ft3/ft2/min to about 300 ft3/ft2/min], tested according to ASTM D-737 under a pressure difference of 1.27cm H2O (4°C) [½ inch of water] across fabric forming the second fabric portion. The second fabric portion has greater stretch than the first fabric portion in at least one direction. At least one of the first inner fabric layer, the first outer fabric layer, the first insulating-filler fabric layer, the second inner fabric layer, the second outer fabric layer, and the second insulating-filler fabric layer includes flame-retardant material or is treated to provide flame-retardance. The fabric garment may also include a waterproof membrane that is laminated to an inner surface of the first outer fabric layer, and which is disposed between the first outer fabric layer and the first insulating-filler fabric layer. The waterproof membrane is a vapor permeable membrane. The waterproof membrane is a porous hydrophobic membrane, a hydrophilic non-porous membrane, or an electrospun material. The fabric garment is reversible, and the first inner fabric layer and the first outer fabric layer have contrasting appearance and/or surface texture. between an inner fabric layer and an outer fabric layer. The insulating-filler fabric layer is a textile fabric with a raised surface on at least one side of the fabric.

Implementations of this example may include one or more of the following additional features. Enclosing the insulating-filler fabric layer includes sewing the insulating-filler fabric layer to one or both of the inner fabric layer and the outer fabric layer. Enclosing the insulating-filler fabric layer includes laminating the insulating-filler fabric layer to one or both of the inner fabric layer and the outer fabric layer. The method also includes treating the outer fabric layer with durable water repellent (DWR), an abrasion resistant coating, camouflage, and/or infrared radiation reduction. The method also includes forming one or more fabric elements out of the insulated composite fabric, and incorporating the fabric elements into a fabric garment. The method also includes forming one or more other fabric elements out of the other fabric, and incorporating the one or more other fabric elements into the fabric garment. The other fabric has an air permeability that is different from an air permeability of the insulated composite fabric. The other fabric has an air permeability that is relatively greater than an air permeability of the insulated composite fabric. In some cases, the other fabric has an air permeability that is relatively less than an air permeability of the insulated composite fabric. The other fabric has greater stretch than the insulated composite fabric in at least one direction. The other fabric is a single layer fabric or a laminate fabric.

Another example which is not part of the invention features a method of forming a hybrid composite fabric garment. The method includes forming a first fabric portion out of a first insulated composite fabric and forming a second fabric portion out of an other fabric having an air permeability that is different from, and greater than, an air permeability of the first insulated composite fabric. The method also includes joining together the first and second fabric portions to form the hybrid composite fabric garment. The first insulated composite fabric includes a first inner fabric layer, a first outer fabric layer, and a first insulating-filler fabric layer enclosed between the first inner fabric layer and the first outer fabric layer,. The first insulating-filler fabric layer is a textile fabric with a raised surface on at least one side of the fabric;

Implementations of this example may include one or more of the following additional features. The other fabric is a second insulated composite fabric. The second insulated composite fabric includes a second inner fabric layer, a second outer fabric layer, and a second insulating-filler fabric layer enclosed between the second inner fabric layer and the second outer fabric layer. The second insulating-filler fabric layer is a textile fabric with a raised surface on at least one side of the fabric. The second insulated composite fabric has an air permeability that is different from, and greater than, an air permeability of the first insulated composite fabric. The method also includes forming the second insulated composite fabric by enclosing the second insulating-filler fabric layer between the second inner fabric layer and the second outer fabric layer. Enclosing the second insulating-filler fabric layer includes quilting the second insulating-filler fabric layer to one or both of the second inner fabric layer and the second outer fabric layer. Enclosing the second insulating-filler fabric layer includes laminating the second insulating-filler fabric layer to one or both of the second inner fabric layer and the second outer fabric layer. The method also includes forming the first insulated composite fabric by enclosing the first insulating-filler fabric layer between the first inner fabric layer and the first outer fabric layer. Enclosing the first insulating-filler fabric layer includes quilting the first insulating-filler fabric layer to one or both of the first inner fabric layer and the first outer fabric layer. Enclosing the first insulating-filler fabric layer includes laminating the first insulating-filler fabric layer to one or both of the first inner fabric layer and the first outer fabric layer.

Another example which is not part of the invention provides an insulated composite fabric that includes an outer fabric layer, and an insulating fabric layer attached the outer fabric layer. The insulating fabric layer is a textile fabric having a raised surface facing towards the outer fabric layer.

Implementations of this example may include one or more of the following additional features. The insulating fabric layer includes a warp knit fabric. The warp knit fabric has a technical back having plush velvet, and a technical face defining a smooth surface. The insulating fabric layer includes a knit fabric having reverse plaited terry sinker loop construction. The knit fabric has a technical back with a raised or napped surface, and a technical face defining a smooth surface. The insulating fabric layer comprises a terry sinker loop fabric in which the terry loop is left un-raised. The terry sinker loop fabric has a reverse plaited construction. A technical face of the terry sinker loop fabric has a napped finish and a technical back is left as un-napped, terry loop. A technical face of the terry sinker loop fabric is left un-napped and a technical back is left as un-napped, terry loop. The terry sinker loop fabric has a regular plaited construction. The insulating fabric layer has a terry sinker loop surface including a plurality of discrete regions of no terry sinker loop interspersed among regions of terry sinker loop. The insulating fabric layer has a pile surface including a plurality of discrete regions of no pile interspersed among regions of pile. In some cases, the insulating fabric layer has a pile surface that includes a plurality of first discrete regions having a first pile height interspersed among a plurality of other discrete regions having contrasting pile height relatively greater than the first pile height. In some examples, yarns forming the first discrete regions are relatively finer that yarns forming the other discrete regions. In some cases, yarns forming the first discrete regions have a denier per filament (dpf) of less than 1.0. The insulating fabric layer provides insulation of about 0.2 clo per 33.9 grams per square meter [or per ounce per square yard] to about 1.6 clo per 33.9 grams per square meter [or per ounce per square yard]. The insulating fabric layer includes a double face warp knit or circular knit fabric. The insulating fabric layer is laminated to the outer fabric layer. The insulating fabric layer is connected to the outer fabric layer by quilting, sewing, tucking, and/or ultrasound bonding. The insulating fabric layer is double face fabric, or a single face textile fabric having the raised surface facing towards the outer fabric layer, and an opposite, smooth surface. The outer fabric layer comprises a woven fabric. The outer fabric layer comprises a knit fabric having a single jersey construction, a warp knit construction, or a mesh construction. The insulated composite fabric has stretch in at least one direction. At least one of the outer fabric layer and the insulating fabric layer includes fibers of stretch and/or elastomeric material (e.g., elastomeric yarn and/or fibers). The outer fabric layer is treated with durable water repellent, an abrasion resistant coating, camouflage, or infrared radiation reduction. The insulated composite fabric has an air permeability of about 5.1 L/m²/sec at 125 Pa to about 1,524 L/m²/sec at 125 Pa [about 1.0 ft³/ft²/min to about 300 ft³/ft²/min], tested according to ASTM D-737 under a pressure difference of 1.27cm H₂O (4°C) [½ inch of water] across the insulated composite fabric. The insulating fabric layer and/or the outer fabric layer includes flame-retardant material or is treated to provide flame-retardance. The insulated composite fabric may also include a waterproof membrane that is laminated to an inner surface of the outer fabric layer, and which is disposed between the outer fabric layer and the insulating fabric layer. The waterproof membrane may be a vapor permeable membrane. The waterproof membrane may be a porous hydrophobic membrane, a hydrophilic non-porous membrane, or an electrospun material.

Implementations can include one or more of the following advantages.

In some implementations, the use of a textile fabric as an insulating filler material in an insulated composite fabric can help to avoid the use of loose fibers, which may have a tendency to migrate. This can also allow various fabrics with various openness to be used as shell layers with reduced concern over fiber migration and penetration of loose fibers through the shell fabric and without having to seal or otherwise limited the air permeability of the shell fabric.

In some cases, an insulating filler material is employed that is made of pile (velvet) and/or velour/fleece, which includes face yarn positioned generally perpendicular to backing or stitching yarn. This type of construction can provide high thickness (bulk) with good resiliency to help maintain thermal insulation even following compression.

Other aspects, features, and advantages are in the description, drawings, and claims.

### DESCRIPTION OF DRAWINGS

FIG. 1 is a front perspective view of an insulated fabric garment.
FIG. 2 is an end section view of an insulated composite fabric.
FIG. 3 is an end section view of an insulating-filler fabric in the form of a double face warp knit fabric.
FIG. 4 is an end section view of an insulating-filler fabric in the form of a double face knit fabric with reverse plaited terry sinker loop knit construction.
FIG. 5 is an end section view of an insulating-filler fabric in the form of a single face fabric.
FIG. 6 is end section view of insulated composite having a light-duty construction.
FIG. 7 is end section view of insulated composite having a medium-duty construction.
FIG. 8 is end section view of insulated composite having a heavy-duty construction.
FIG. 9 is a front perspective view of a hybrid insulated fabric garment.
FIG. 10 is an end section view of an example of a insulated composite fabric for use in a first fabric portion of the hybrid insulated fabric garment of FIG. 9.
FIG. 11 is an end section view of an example of a insulated composite fabric for use in a second fabric portion of the hybrid insulated fabric garment of FIG. 9.
FIG. 12 is a plan view of an insulating-filler fabric having a pile surface that includes no pile regions interspersed among regions of pile.
FIGS. 13A-13E are end section views illustrating insulating-filler fabrics having void regions (i.e., regions of relatively lower pile or no pile).
FIGS. 14A-14C are end section views of alternative embodiments of an insulated composite fabric laminate.
FIG. 15A is an end section view of a two layer insulated composite fabric.
FIG. 15B is an end section view of a two layer insulated composite fabric laminate.
FIG. 16 is an end section view of an insulated composite fabric having a waterproof membrane.
FIG. 17 is a front perspective view of a hybrid insulated fabric garment having regions of contrasting water resistance.

Like reference symbols in the various drawings indicate like elements.

### DETAILED DESCRIPTION

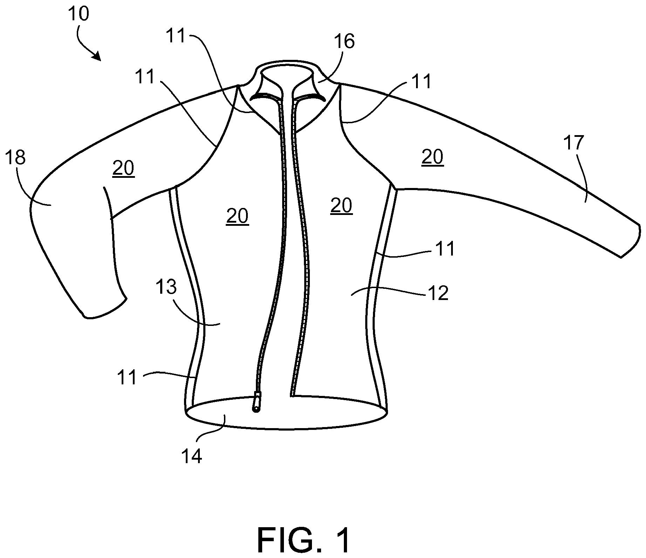

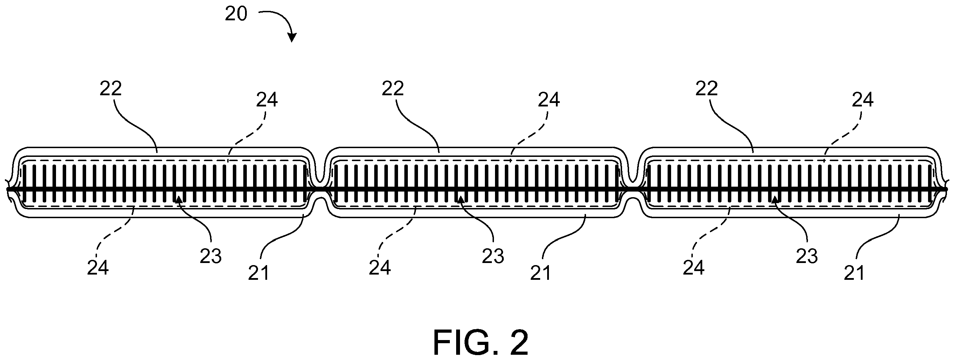

Referring to FIG. 1, an insulated fabric garment 10 is formed from a plurality of fabric elements that are joined together by stitching at seams 11. The fabric elements include left and right front elements 12, 13, a rear element 14, a collar element 16, and left and right arm elements 17, 18. Each of these fabric elements consists of an insulated composite fabric ("technical down"). FIG. 2 illustrates a insulated composite fabric 20 that is suitable for forming the fabric elements. The insulated composite fabric 20 consists of an inner "shell-liner" fabric layer 21, which forms an inner surface of the fabric garment 10 worn towards a user's body; an outer "shell" fabric layer 22, which forms an outer surface of the fabric garment 10; and an insulating-filler fabric layer 23 enclosed therebetween. The insulating-filler fabric layer 23 can be sewn (e.g., quilted (as illustrated in FIG. 2) and/or connected with tack stitches) to one or both of the inner and outer fabric layers 21, 22, or, in some cases, a loose insulating-filler fabric layer 23 is anchored in the seams 11 of the fabric garment 10 and/or along the periphery of the individual fabric elements. Alternatively or additionally, the insulating-filler fabric layer 23 can be attached to one or both of the inner and outer fabric layers 21, 22 by other physical anchoring, e.g., via snapping, tucking, jumping and tucking, ultrasound bonding, lamination, etc.

The insulating-filler fabric layer 23 is a textile fabric with raised surface on one side or both sides. The textile fabric of the insulating-filler fabric layer 23 is constructed to include face yarn (pile) that is positioned generally perpendicular to stitching or backing yarn. The term "pile," as used herein, includes pile surfaces formed by any desired method, including but not limited to cut loops, loops cut on the knitting machine, loops cut off the knitting machine, and raised fibers. This type of construction can provide high bulk with good resiliency to maintain the thermal insulation of the insulating-filler fabric layer 23 even under compression.

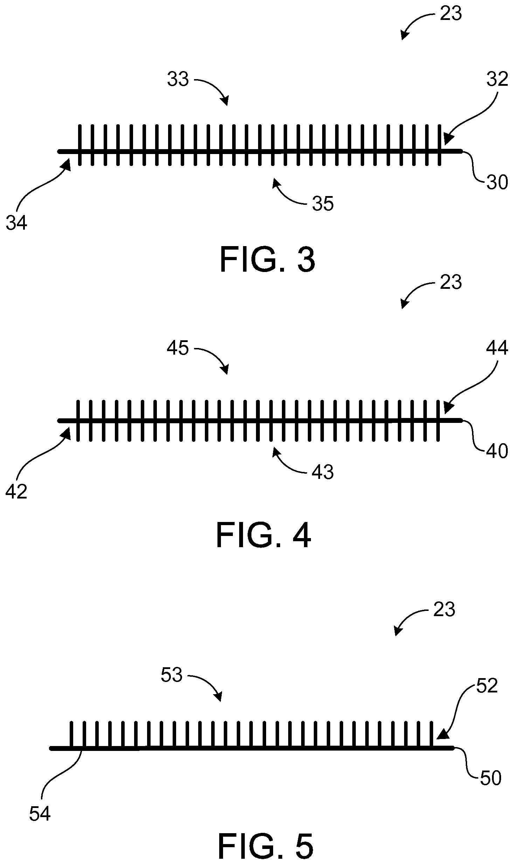

Referring to FIG. 3, the insulating-filler fabric layer 23 may be formed from a double face warp knit fabric 30 that includes a technical back 32 formed of pile yarns that are brushed to provide a plush velvet surface 33, and a technical face 34 formed of backing yarns and stitching yarns. Either the backing yarns or the stitching yarns of the technical face 34 may be napped to form a fleece/velour 35. Alternatively, in some cases, some of the pile yarns overlay the stitch yarn at the technical face 34 and may be brushed or napped to form a fleece/velour 35 surface at the technical face 34. Additional details regarding the construction of a suitable double face warp knit fabric may be found in U.S. Patent Nos. 6,196,032, issued March 6, 2001, 6,199,410, issued March 13, 2001, 6,832,497, issued December 21, 2004, 6,837,078, issued January 4, 2005, and 5,855,125, issued January 5, 1999. Suitable double face warp knit fabrics are commercially available, e.g., from POLARTEC LLC, Lawrence MA, under the trade name BOUNDARY^{®}.

Alternatively or additionally, the insulating-filler fabric layer 23 may be formed from a double face knit fabric having reverse plaited terry sinker loop knit construction. Referring to FIG. 4, the double face knit fabric with reverse plaited terry sinker loop knit construction 40 has a technical face 42 with a raised or napped surface 43, and a technical back 44 in which sinker loops are sheared to form a cut loop velvet surface 45. Additional details regarding the construction of a suitable double face knit fabric with reverse plaited terry sinker loop knit construction may be found in U.S. Patent No. 6,131,419, issued October 17, 2000.

Referring to FIG. 5, the insulating-filler fabric layer 23 may also be formed from a single face fabric 50 that is constructed to include a technical face 52 with face yarn that is positioned generally perpendicular to stitching or backing yarn 54.

Alternatively or additionally, the insulating-filler fabric layer 23 may be formed from a fabric having a sliver knit construction. The sliver knit construction can be formed by circular knitting coupled with the drawing-in of sliver of fibers to produce a pile like fabric. The sliver knit construction allows for the use of relatively coarse fiber (e.g., 5 dpf to 15 dpf). This relatively coarse fiber can provide for good resiliency and resistance to compression, and can generate very high pile (e.g., pile height of about 7.6 cm [3 inches] to about 10.2 cm [4 inches]). The sliver fabric of the insulating-filler fabric layer can be finished as a single face fabric with a raised surface at the technical back, or as a double face fabric with raised surfaces on both the technical back and the technical face. Generally, the sliver knit construction is prone to "shedding" and may exhibit undesirable aesthetic appearance (e.g., poor finish) when raised on the technical face. However, when incorporated as a filler layer, the aesthetic appearance of the raised technical face is less critical since the fabric is enclosed between the outer "shell" fabric layer 22 and the inner "shell-liner" fabric layer 21.

In some cases, the insulating-filler fabric layer 23 may include elastomeric material for enhanced stretch and recovery. For example, the insulating-filler fabric layer 23 may include elastomeric yarns and/or fibers, e.g., incorporated in the backing or stitching yarns. In some examples, the insulating-filler fabric layer 23 has stretch without including elastomeric material.

The insulating-filler fabric layer 23 has a weight of about 34 grams per square meter [1 ounce per square yard] to about 407 grams per square meter [12 ounces per square yard], has relatively high thickness (bulk) (e.g., a thickness of at least cm [about 0.1 inch], e.g., about 0.25 [about 0.1 inch] to about 2.54 cm [about 1.0 inch]), and has high insulation per weight unit (e.g., about 0.2 clo per 33.9 grams per square meter [or per ounce per square yard] to about 1.6 clo per 33.9 grams per square meter [or per ounce per square yard]).

The insulating-filler fabric layer 23 may consist of a hydrophobic fabric, which, in case of water penetration through the outer fabric layer 22 (FIG. 2) will not be held or absorbed, and will be able to dry fast.

The inner and outer fabric layers 21, 22 (FIG. 2) can both be made of woven fabric. Alternatively, in some cases, the inner "shell-liner" fabric layer 21 and/or the outer "shell" fabric layer 22 may instead consist of a knit fabric, such as a knit fabric having a single jersey construction, a double knit construction, a warp knit construction, or a mesh construction. The respective fabrics of the inner and outer fabric layers 21, 22 may be formed of synthetic yarns and/or fibers, regenerated yarns and/or fibers, natural yarns and/or fiber, and combinations thereof.

In some cases, the inner fabric layer 21 and/or the outer fabric layer 22 can also include elastomeric material, such as elastomeric yarns and/or fibers incorporated in the construction of the respective fabrics, for enhanced stretch and recovery. The incorporation of elastomeric material in the inner and outer fabric layers 21,22 can be particularly beneficial where the insulating-filler fabric layer 23 also has stretch, such that the inner fabric layer 21 and the outer fabric layer 22 can stretch and move with the insulating filler layer 23 for enhanced user comfort.

The moisture vapor transmission rate and the air permeability of the insulated composite fabric 20 can be controlled by the void or openness of the fabrics of the inner and/or outer fabric layers 21, 22. In some cases, for example, the control of the air permeability of the insulated composite fabric 20 can be achieved by controlling one or more parameters (e.g., yarn size, yarn count, and/or weave density (pick/fill)) of the fabric forming the inner "shell-liner" fabric layer 21 and/or the outer "shell" fabric layer 22. Alternatively or additionally, the control of the air permeability of the insulated composite fabric 20 can be achieved by applying coating or film lamination 24 (FIG. 2) to one or more surfaces of the inner fabric layer 21 and/or the outer fabric layer 22.

The respective fabrics of the inner and outer fabric layers 21, 22 can be selected to provide the insulated composite fabric 20 with an air permeability within a range of about 5.1 L/m²/sec at 125 Pa to about 1,524 L/m²/sec at 125 Pa [about 1.0 ft³/ft²/min to about 300 ft³/ft²/min] according to ASTM D-737, under a pressure difference of 1.27cm H₂O (4°C) [½ inch of water] across the insulated composite fabric 20. Depending on the particular construction, the composite fabric 20 may be tailored toward different end uses. For example, the insulated composite fabric 20 can be constructed to provide cold weather insulation with relatively high air permeability for use in conditions of relatively high physical activity. In this case, the respective fabrics of the inner and outer fabric layers 21, 22 can be selected to provide the insulated composite fabric 20 with an air permeability of about 508 L/m²/sec at 125 Pa to about 1,524 L/m²/sec at 125 Pa [about 100 ft³/ft²/min to about 300 ft³/ft²/min] according to ASTM D-737, under a pressure difference of 1.27cm H2O (4°C) [½ inch of water] across the insulated composite fabric 20.

Alternatively, the insulated composite fabric 20 can be constructed to provide cold weather insulation with relatively low air permeability for use in conditions of relatively little physical activity. In this case, the respective fabrics of the inner and outer fabric layers 21, 22 can be selected to provide the insulated composite fabric 20 with an air permeability of about 5.1 L/m²/sec at 125 Pa to about 406.4 L/m²/sec at 125 Pa [about 1 ft³/ft²/min to about 80 ft³/ft²/min] according to ASTM D-737, under a pressure difference of 1.27cm H2O (4°C) [½ inch of water] across the insulated composite fabric 20. The complete disclosures of the test method ASTM D-737 is incorporated herein by reference.

In some cases, the inner fabric layer 21 can have a relatively higher air permeability than the fabric of the outer fabric layer 22. Utilizing fabric with higher air permeability for the inner fabric layer 21, which is worn towards the user's body, can help to enhance vapor movement and vapor transmission away from the user's body during periods of high activity to help prevent overheating. For example, the inner fabric layer 21 may have an air permeability of about 25.4 L/m²/sec at 125 Pa to about 1,524 L/m²/sec at 125 Pa [about 5 ft³/ft²/min to about 300 ft³/ft²/min], tested according to ASTM D-737, under a pressure difference of 1.27cm H2O (4°C) [½ inch of water] across the inner fabric layer 21, and the outer fabric layer 22 may have an air permeability of about 5.1 L/m²/sec at 125 Pa to about 508 L/m²/sec at 125 Pa [about 1 ft³/ft²/min to about 100 ft³/ft²/min] (e.g., about 5.1 L/m²/sec at 125 Pa to about 152.4 L/m²/sec at 125 Pa [about 1 ft³/ft²/min to about 30 ft³/ft²/min]), tested according to ASTM D-737, under a pressure difference of 1.27cm H₂O (4°C) [½ inch of water] across the outer fabric layer 22.

Further description is provided by the following examples, which do not limit the scope of the claims.

### EXAMPLES

### Example 1

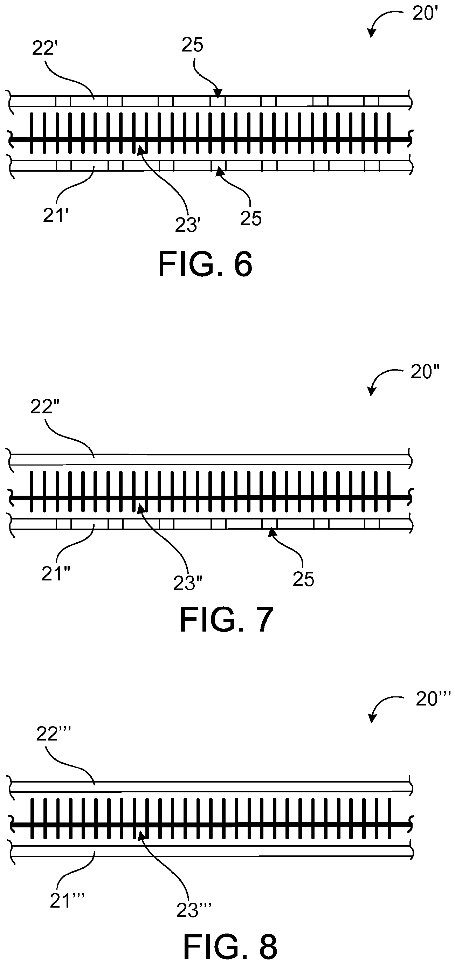

FIG. 6, illustrates one example of an insulated composite fabric 20' with a light-duty construction. The fabric includes an inner fabric layer 21', an outer fabric layer 22', and an insulating-filler fabric layer 23' enclosed therebetween. Both the inner fabric layer 21' and the outer fabric layer 22' consist of a knit fabric with mesh construction. The mesh construction of the inner and outer fabric layers 21', 22' has a plurality of openings 25. The insulating-filler fabric layer 23' consists of a double face knit fabric (e.g., double face warp knit, double face knit with raised sinker terry loop construction, or double face sliver knit) having a weight of about 34 grams per square meter [1 ounce per square yard] to about 136 grams per square meter [4 ounces per square yard], and a bulk (thickness) of about 0.25 cm [about 0.1 inch] to about 0.5 cm [about 0.2 inch]. The insulating-filler fabric layer 23' is sewn (e.g., quilted) to one or both of the inner and outer fabric layers 21', 22'. The light-duty insulated composite fabric 20' provides insulation of about 0.8 clo per 33.9 grams per square meter [or per ounce per square yard] to about 1.6 clo per 33.9 grams per square meter [or per ounce per square yard].

### Example 2

FIG. 7, illustrates an insulated composite fabric 20" with a medium-duty construction. The medium-duty insulated composite fabric 20" includes an inner fabric layer 21" consisting of a knit fabric with mesh construction, an outer fabric layer 22" consisting of a woven fabric, and an insulating-filler fabric layer 23" enclosed therebetween. The insulating-filler fabric layer 23" consists of a double face knit fabric (e.g., double face warp knit, double face knit with raised sinker terry loop construction, or double face sliver knit) having a weight of about 102 grams per square meter [3 ounces per square yard] to about 271 grams per square meter [8 ounces per square yard], and a bulk (thickness) of about 0.38 cm [about 0.15 inch] to about 1.0 cm [about 0.4 inch. The insulating-filler fabric layer 23" is sewn (e.g., quilted) to one or both of the inner and outer fabric layers 21", 22". The medium-duty insulated composite fabric 20" provides insulation of about 1.0 clo per 33.9 grams per square meter [or per ounce per square yard] to about 1.8 clo per 33.9 grams per square meter [or per ounce per square yard].

### Example 3

FIG. 8, illustrates an insulated composite fabric 20'" with a heavy-duty construction. The heavy weight insulated composite fabric 20'" includes an inner fabric layer 21"', an outer fabric layer 22"', and an insulating-filler fabric layer 23"' enclosed therebetween. In this heavy-duty construction, both the inner fabric layer 21"' and the outer fabric layer 22'" consist of a woven fabric. The insulating-filler fabric layer 23"' consists of a double face knit fabric (e.g., double face warp knit, double face knit with raised sinker terry loop construction, or double face sliver knit) having a weight of about 136 grams per square meter [4 ounces per square yard] to about 407 grams per square meter [12 ounces per square yard], and a bulk (thickness) of about 0.5 cm [about 0.2 inch] to about 2.5 cm [about 1.0 inch]. The insulating-filler fabric layer 23'" is sewn (e.g., quilted) to one or both of the inner and outer fabric layers 21"', 22"'. The heavy-duty insulated composite fabric 20"' provides insulation of about 1.0 clo or per 33.9 grams per square meter [or per ounce per square yard] to about 3.0 clo or per 33.9 grams per square meter [or per ounce per square yard].

### Other Embodiments

While certain embodiments have been described above, other embodiments are possible.

For example, an entire fabric garment may be constructed from the insulted composite fabric, or, in some cases, a fabric garment may be formed which includes the insulated composite fabric only in sections.

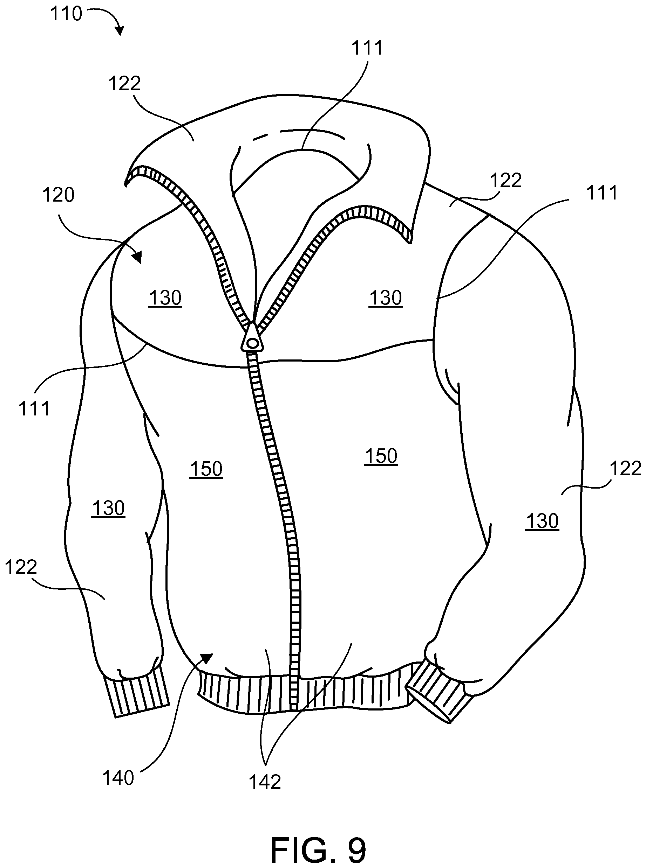

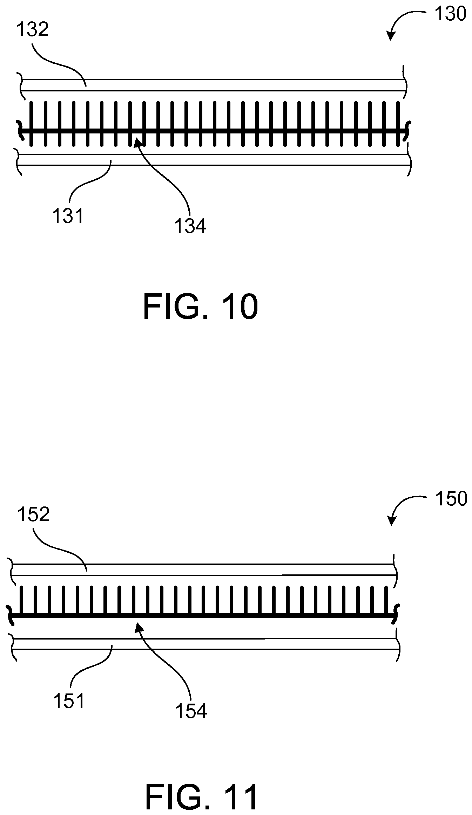

FIG. 9 illustrates a hybrid insulated fabric garment 110 in the form of a jacket that includes a first fabric portion 120 and a second fabric portion 140. The first fabric portion 120 covers the user's shoulder regions and extends below the elbows down towards the user's wrists. The first fabric portion 120 is formed of a plurality of first fabric elements 122 that are joined together by stitching at seams 111. The first fabric elements 122 are formed from a first insulated composite fabric 130, which may have a construction as described above with regard to FIG. 2. Referring to FIG. 10, the first insulated composite fabric 130 includes a first inner fabric layer 131 that forms an inner surface of the fabric garment 110 worn towards the user's body, a first outer fabric layer 132 that forms an outer surface of the fabric garment 110, and a first insulating-filler fabric layer 134 consisting of a textile fabric with a raised surface on at least one side of the fabric (a double face fabric is shown in FIG. 10). The first insulating-filler fabric layer 134 is enclosed between the first inner fabric layer 131 and the first outer fabric layer 132. The first insulated composite fabric 130 has an air permeability of about 5.1 L/m²/sec at 125 Pa to about 406.4 L/m²/sec at 125 Pa [about 1.0 ft³/ft²/min to about 80.0 ft³/ft²/min] (e.g., about 20.3 L/m²/sec at 125 Pa to about 101.6 L/m²/sec at 125 Pa [about 4.0 ft³/ft²/min to about 20.0 ft³/ft²/min]) tested according to ASTM D-737, under a pressure difference of 1.27cm H2O (4°C) [½ inch of water] across the first insulated composite fabric 130.

The second fabric portion 140 covers a lower torso region of the user's body and is formed of a plurality of second fabric elements 142, which are joined together and with the first fabric elements 122 by stitching at seams 111. The second fabric elements 142 are formed from a second insulated composite fabric 150, which, like the first insulated composite fabric 130, may also have a construction as described above with regard to FIG. 2. With reference to FIG. 11, the second insulated composite fabric 150 includes a second inner fabric layer 151, which forms an inner surface of the fabric garment 110; a second outer fabric layer 152, which forms an outer surface of the fabric garment 110; and a second insulating-filler fabric layer 154 consisting of a textile fabric with a raised surface on at least one side of the fabric. A single face fabric is shown in FIG. 11, however, the second insulating-filler fabric layer 154 may, alternatively or additionally, include a double face fabric, e.g., a double face fabric with relatively lower thickness than the fabric of the first insulating-filler fabric layer 134. The second insulating-filler fabric layer 154 is enclosed between the second inner fabric layer 151 and the second outer fabric layer 152. The second insulated composite fabric 150 is constructed to have an air permeability that is different from, and relatively greater than the air permeability of the first insulated composite fabric 130. The second insulated composite fabric 150 has an air permeability of about 25.4 L/m²/sec at 125 Pa to about 1,524 L/m²/sec at 125 Pa [about 5 ft³/ft²/min to about 300 ft³/ft²/min] tested according to ASTM D-737, under a pressure difference of 1.27cm H2O (4°C) [½ inch of water] across the second insulated composite fabric 150.

Alternatively or additionally, the first and second fabric portions 120, 140 can have contrasting stretch. For example, the first fabric portion 120 may have greater stretch (e.g., in the outer shell, the inner shell layer, and the insulting-filler) than the second fabric layer 140. Providing greater stretch in the shoulder regions, for example, may enhance wearer comfort and reduce resistance while moving the arms, while other parts, e.g., the second fabric portion, may be non-stretch.

In some cases, the second fabric elements 142 may, instead, consist of a plain textile fabric, e.g., a circular knit like single jersey (plaited or non-plaited), double knit, rib, warp knit, or woven with and/or without stretch. Or, as another alternative, the second fabric elements 142 may consist of a double face knit fabric having reverse plaited terry sinker loop knit construction. Suitable fabrics for forming the second fabric elements 142 are commercially, available, e.g., from POLARTEC LLC, Lawrence MA, under the trade names POWER STRETCH^{®} and BOUNDARY^{®}.

In some cases, the second fabric elements 142 may be formed of a laminate composite fabric with outer and inner fabric layers; and a barrier resistant to wind and liquid water while providing water vapor transport through absorption-diffusion-desorption, including a hydrophilic barrier and/or adhesive layer adhered to the inner and/or outer fabric layer. Suitable laminate composite fabrics are commercially available, e.g., from POLARTEC LLC, Lawrence MA, under the trade names WINDBLOC® and POWER SHIELD®.

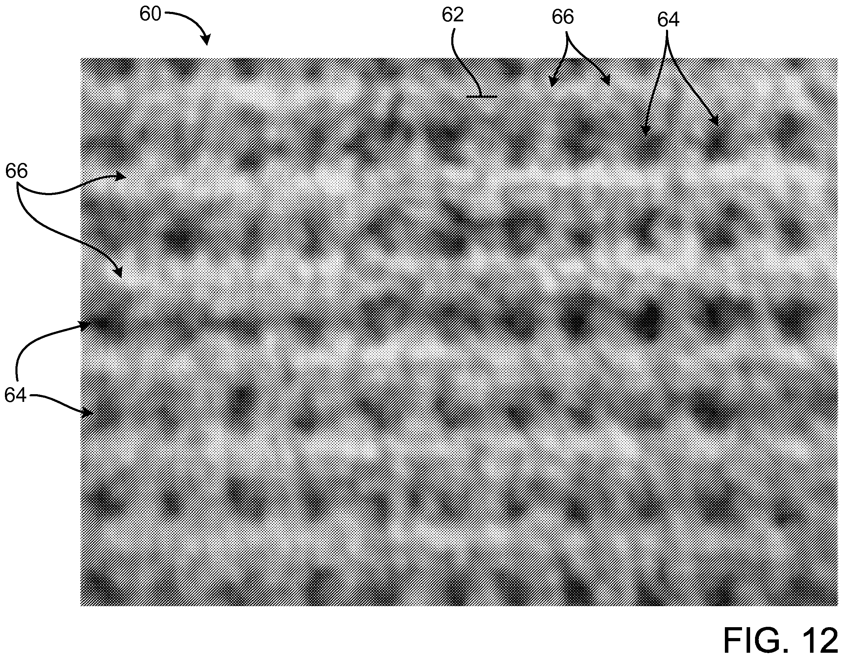

In some cases, enhancing the packability or compression (i.e., reducing the total volume of the insulated composite fabric) can be achieved by having voids or pile out (i.e., regions of no pile) in a predetermined pattern in the insulating-filler fabric layer. For example, FIG. 12 shows a raised surface knit fabric 60 having a first pile surface 62 that includes regions of no pile 64 interspersed among regions of pile 66 (e.g., pile having a height of at least about 2.0 mm. About 5 % to about 70% of the surface area of the insulating-filler fabric can be covered by no pile regions.

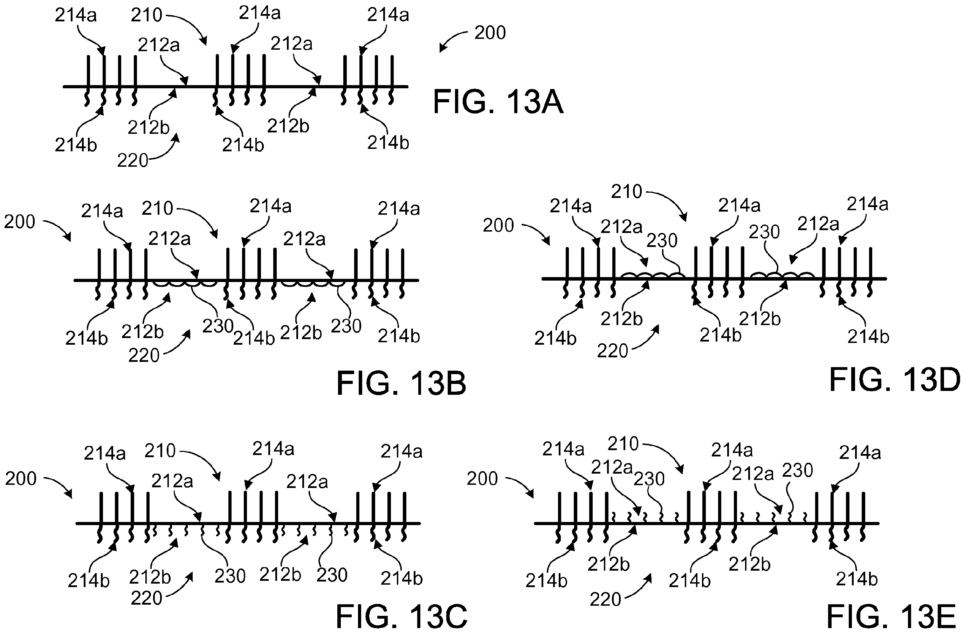

As mentioned above, the raised surface knit fabric of the insulating filler layer may have a construction made on a warp knitting double needle bar raschel machine, where the pile yarns are grouped in a predetermined pattern and some predetermined sections have voids (no pile yarn). For example, FIG. 13A illustrates an embodiment of such a raised surface knit fabric 200 having a first pile surface 210 on the technical back that includes void regions 212a (e.g., regions of no pile) interspersed between regions of pile 214a. The fabric 200 also includes a second pile surface 220 (after raising) on the technical face. As shown in FIG. 13A, the second pile surface 220 also includes void regions 212b (e.g., regions of no pile) interspersed between regions of pile 214b. When incorporated into an insulated composite fabric, such as described above, the pile yarn on the technical back and on the technical face (after raising) will keep the outer "shell" and the inner "shell-liner" fabric layers spaced apart, entrapping stagnant air, maximizing thermal insulation of the insulated composite fabric. The air entrapped between the shell and the shell-liner in the regions of no pile, will provide good thermal in static condition at very low air movement or wind.

In dynamic conditions (air flow or wind blowing onto the shell material having controlled air permeability), the thermal insulation in the void region may be reduced. However, the loss of thermal insulation can be reduced by providing relative low fleece/velour (lower than the interconnecting pile) in the void regions 212a, 212b. This can be done by adding additional pile yarn 230 (preferably in fine dpf like micro fiber under 1.0 denier) without generating interconnecting pile, but which is held by the stitch and backing yarn along the technical face (FIG. 13B) and/or along the technical back (FIG. 13D), and generating fleece/velour on the technical face upon raising the additional pile yarn 230 by napping (FIG. 13C) and/or generating fleece on the technical back upon raising the additional pile yarn 230 by napping (FIG. 13E). This low fleece/velour (much lower than that formed by the interconnecting pile) in the void region with improved tortuosity and reduced air movement (keeping entrapped air stagnate) to reduce thermal heat loss by convection.

While embodiments of insulating-filler fabrics have been described which include one or more raised surfaces, in some embodiments, e.g., where less insulation is needed, the insulating-filler fabric may instead have a regular knit construction (single or double face) which is finished on one or both sides by brushing.

In some cases, the outer "shell" fabric layer, the inner "shell-liner" fabric layer, and/or the insulating-filler fabric layer may be formed of, and/or incorporate, flame-retardant materials (e.g., flame retardant fibers), or may be treated (e.g., chemically treated) to provide flame-retardance. In some embodiments, the outer "shell" fabric layer is treated with durable water repellent (DWR), an abrasion resistant coating, camouflage, and/or infrared radiation reduction.

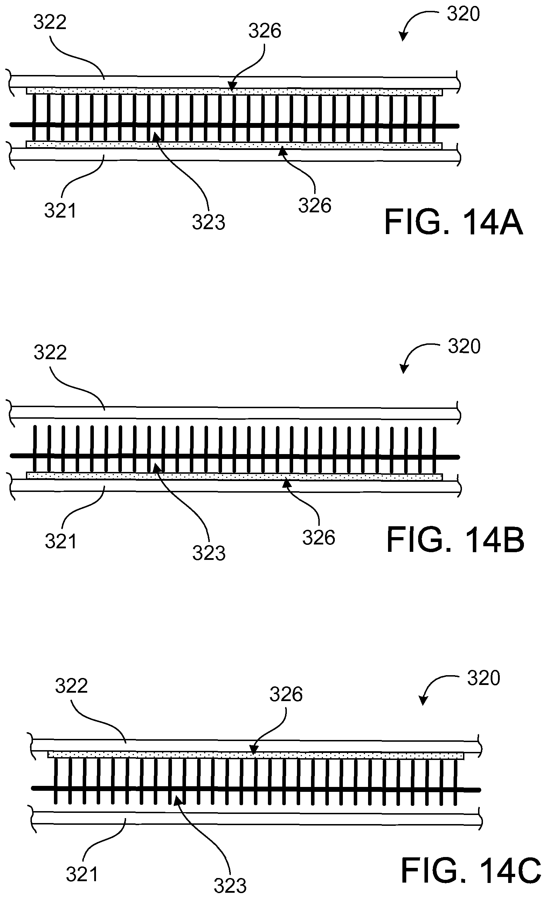

Although embodiments of insulated composite fabrics have been described in which an insulating-filler fabric layer is attached to one or both of a inner fabric layer and an outer fabric layer by sewing, in some cases, the insulating-filler fabric layer may be laminated to one or both of the inner fabric layer and the outer fabric layer. FIG. 14A illustrates an insulated composite fabric laminate 320. The insulated composite fabric laminate 320 includes an inner fabric layer 321, an outer fabric layer 322, and an insulating-filler fabric layer 323 enclosed therebetween. The insulating-filler fabric layer 323 consists of a double face knit fabric that is bonded to the inner fabric layer 321 and the outer fabric layer 322 with an adhesive 326. The adhesive can be applied in a manner to substantially avoid further limiting the air permeability of the insulated composite fabric laminate 320. The adhesive can be applied, for example, in a dot coating pattern.

FIG. 14B illustrates an alternative embodiment in which the insulating-filler fabric layer 323 is laminated only to the inner fabric layer 321, and FIG. 14C illustrates an alternative embodiment in which the insulating filler fabric layer 323 is laminated only to the outer fabric layer 322.

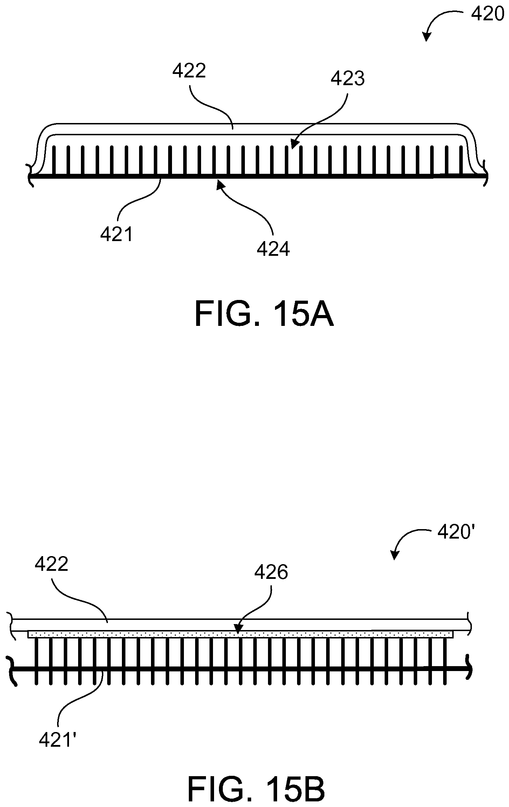

FIG. 15A illustrates yet another example of an insulated composite fabric 420. The insulated composite fabric 420 of FIG. 15A includes an outer "shell" fabric layer 422 and an inner, insulating fabric layer 421. The outer fabric layer 422 consists of a woven fabric. The insulating fabric layer 421 consists of a single face knit fabric (e.g., single face warp knit, single face knit with raised sinker terry loop construction, or single face sliver knit) having a raised surface 423 (pile or velour) and an opposite, smooth surface 424. The insulating fabric layer 421 is attached to the outer fabric layer 422 (e.g., by sewing (e.g., quilting at any pattern, sewing, tucking, ultrasound bonding, or tack stitching), lamination, anchored by stitching along seams, or other physical anchoring like snapping, etc.) such that the raised surface 423 faces toward the outer fabric layer 422. The smooth surface 424 of the insulating fabric layer 421 forms an exposed surface of the insulated composite fabric 420. The insulated composite fabric 420 can be incorporated in a fabric garment such as any of the garments described above. For example, the insulated composite fabric 420 of FIG. 14 could be used in the first fabric portion or the second fabric portion of the jacket of FIG. 9. When incorporated in a fabric garment, the smooth surface 424 of the insulating fabric layer 421 can be arranged to form an inner surface of the garment worn towards the user's body.

Either or both of the insulating fabric layer 421 and the outer fabric layer 422 can have stretch in at least one direction. In some cases, for example, either or both of the insulating fabric layer 421 and the outer fabric layer 422 can include elastomeric material (e.g., spandex yarns and/or fibers) for enhanced stretch and shape recovery.

Referring still to FIG. 15A, the moisture vapor transmission rate and the air permeability of the insulated composite fabric 420 can be controlled by the void or openness of the fabric of the outer fabric layer 422. In some cases, for example, the control of the air permeability of the insulated composite fabric 420 can be achieved by controlling one or more parameters (e.g., yarn size, yarn count, and/or weave density (pick/fill)) of the fabric forming the outer fabric layer 422. Alternatively or additionally, the control of the air permeability of the insulated composite fabric 420 can be achieved by applying coating or film lamination to one or both surfaces of the outer fabric layer 422.

FIG. 15B illustrates yet another example of an insulated composite fabric 420'. The insulated composite fabric 420' of FIG. 15B includes an outer "shell" fabric layer 422 and an inner, insulating fabric layer 421'. As illustrated in FIG. 15B, the insulating fabric layer 421' consists of a double face knit fabric that is bonded to the outer fabric layer 422 with an adhesive 426 to form a fabric laminate. Alternatively or additionally, the insulating fabric layer 421' may be connected to the outer fabric layer by quilting (in any pattern), tucking, ultrasound bonding, etc.

Either or both of the insulating fabric layer 421', and the outer fabric layer 422 can have stretch in at least one direction. The moisture vapor transmission rate and the air permeability of the insulated composite fabric 420' can be controlled as discussed above with regard to FIG. 15A.

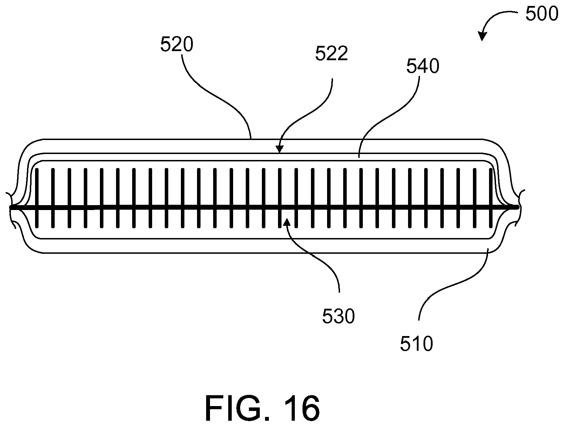

In some cases, the insulated composite fabric may be provided with water resistant properties. For example, the outer "shell" fabric layer may have a very tight construction (e.g., a tight woven construction) and may be treated with durable water repellent (DWR). Alternatively or additionally, the insulated composite fabric may be provided with a waterproof membrane (e.g., a breathable waterproof membrane). For example, FIG. 16 illustrates an embodiment of an insulated composite fabric 500 that consists of an inner "shell-liner" fabric layer 510, and an outer "shell" fabric layer 520 and an insulating-filler fabric layer 530 enclosed therebetween. In this example, a waterproof membrane 540 is laminated to an inner surface 522 of the outer "shell" fabric layer 520. The water barrier can be made of porous hydrophobic membrane, hydrophilic non-porous membrane, or electrospun material. Preferably, the insulating-filler fabric layer 530 is hydrophobic (e.g., formed of hydrophobic yarns/fibers), which, in case of water penetration through the outer fabric layer 520 will not be held or absorbed, and will be able to dry fast.

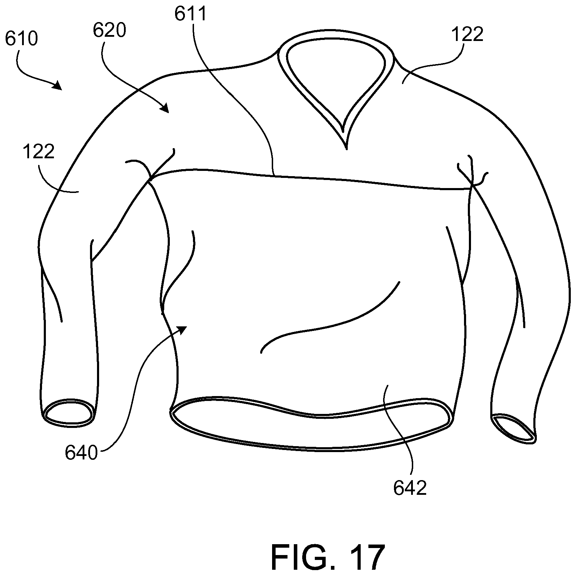

The water proof insulated composite fabric 500 can be used to form an entire fabric garment, or in some cases may only form a portion or portions of the silhouette. For example, FIG. 17 illustrates a hybrid insulated fabric garment 610 that includes a first fabric portion 620 and a second fabric portion 640. The first fabric portion 620 is disposed in one or more upper regions (e.g., arranged to cover a wearer's upper torso, shoulders and extending down the arms) of the fabric garment (i.e., those region more likely in use to be exposed to rain). The first fabric portion 620 is formed of first fabric elements 622. The first fabric elements 622 are formed from a water repellent insulated composite fabric, which may have a construction as described above with regard to FIG. 16.

The second fabric portion 640 is disposed in a lower region (e.g., arranged to cover lower torso and lower back regions of the user's body), which are less likely during use to be exposed to rain. The second fabric portion 640 is formed of second fabric elements 642, which are joined together and with the first fabric elements 622 by stitching at seams 611. The second fabric elements 642 are formed from a second insulated composite fabric, which may have a construction as described above with regard to FIG. 2.

In some embodiments, a reversible insulated composite fabric garment may also be provided. For example, the insulated composite fabric garment can be formed of an insulated composite fabric, similar to that described above with reference to FIG. 2, consisting of a first fabric layer, a fabric layer, and an insulating-filler fabric layer enclosed therebetween. The fabric garment may be reversible such that both the first fabric layer and the second fabric layer can optionally serve as either an outer "shell" fabric layer or an inner "shell-liner" fabric layer, which will allow the wearer to have a reversible insulated composite fabric ("technical down") garment. The first and second fabric layers may be made of different color fabrics and/or fabrics with different patterns (e.g., camouflage) and/or different textures.

Although fabric garments in the form of jackets have been described, it should be noted that the insulated composite fabrics described herein may also be incorporated in various types of fabric articles, including, but not limited to, coats, shells, pull-overs, vests, shirts, pants, blankets (e.g., home textile blankets or outdoor blankets), etc.

In some cases, the insulating layer (e.g., the insulating-filler fabric layer (e.g., of any one of FIGS. 2, 6-8, 10, 11, or 14A-14C) or the insulating fabric layer (e.g., of any one of FIGS. 15A or 15B)) may consist of a terry sinker loop (in reverse plaiting or regular plaiting) in which the terry loop is left un-raised. A high sinker (e.g., 2-9 mm) can be used to form the terry sinker loop. In this construction, the terry sinker loop may be provided in a predetermined pattern or design, while having other section(s) without the terry sinker loop (having void), to reduce the total weight as well as helping in the pliability and easy pack ability (easy folding). As mentioned above, the terry sinker loop can be made in regular plaiting construction as well as reverse plaiting. In the case of reverse plaiting, the technical face (jersey side) may be finished, and the technical back may be left in a terry sinker loop (un napped), or the terry sinker loop may be left on the technical back, without napping the technical face jersey side (similar to regular plaited construction).

## Claims

1. An insulated composite fabric comprising:
an inner fabric layer (21);
an outer fabric layer (22); and
an insulating-filler fabric layer (23) enclosed between the inner fabric layer (21) and the outer fabric layer (22),
wherein the insulating-filler fabric layer (23) is a textile fabric with a raised surface on at least one side of the fabric;
wherein the insulating-filler fabric layer (23) has a pile surface including a plurality of discrete regions of no pile (212a, 212b) interspersed among regions of pile (214a, 214b);
**characterized in that** the insulating-filler fabric layer (23) has a pile surface including a plurality of first discrete regions (230) having a first pile height interspersed among a plurality of other discrete regions having contrasting pile height relatively greater than the first pile height.

2. The insulated composite fabric of claim 1, wherein the insulating-filler fabric layer (23) comprises a terry sinker loop fabric in which the terry loop is left un-raised.

3. The insulated composite fabric of claim 2, wherein the terry sinker loop fabric has a reverse plaited construction.

4. The insulated composite fabric of claim 3, wherein a technical face of the terry sinker loop fabric has a napped finish and a technical back is left as un-napped, terry loop.

5. The insulated composite fabric of claim 3, wherein a technical face of the terry sinker loop fabric is left un-napped and a technical back is left as un-napped, terry loop.

6. The insulated composite fabric of claim 2, wherein the terry sinker loop fabric has a regular plaited construction.

7. The insulated composite fabric of claim 1, wherein the insulating-filler fabric layer (23) has a terry sinker loop surface including a plurality of discrete regions of no terry sinker loop interspersed among regions of terry sinker loop.

8. The insulated composite fabric of any one of the preceding claims, wherein the insulating-filler fabric layer (23) has a weight of about 34 grams per square meter [1 ounce per square yard] to about 407 grams per square meter [12 ounces per square yard], and a thickness (bulk) of about 0.25 cm [0.1 inch] to about 10.2 cm [4.0 inches]; and
wherein the insulating-filler fabric layer (23) provides insulation of about 0.2 clo per 33.9 grams per square meter [per ounce per square yard] to about 1.6 clo per 33.9 grams per square meter [per ounce per square yard].

9. The insulated composite fabric of any one of the preceding claims, wherein the insulating-filler fabric layer (23) is quilted to one or both of the inner fabric layer (21) and the outer fabric layer (22).

10. The insulated composite fabric of any one of claims 1-9, wherein the insulating-filler fabric layer (23) is stitched to one or both of the inner fabric layer (21) and the outer fabric layer (22) along a periphery of the insulated composite fabric.

11. The insulated composite fabric of claim 1, wherein yarns forming the first discrete regions (230) are relatively finer than yarns forming the other discrete regions, or
wherein yarns forming the first discrete regions (230) have a denier per filament (dpf) of less than 1.0.

12. The insulated composite fabric of any one of the preceding claims, wherein the inner fabric layer (21) has an air permeability that is different from an air permeability of the outer fabric layer (22), and wherein the inner fabric layer (21) has an air permeability that is relatively greater than an air permeability of the outer fabric layer (22), or
wherein the inner fabric layer (21) has an air permeability that is relatively less than an air permeability of the outer fabric layer (22).

13. The insulated composite fabric of any one of the preceding claims, wherein the insulated composite fabric has an air permeability of about 5.1 L/m²/sec at 125 Pa to about 1,524 L/m²/sec at 125 Pa [about 1.0 ft³/ft²/min to about 300 ft³/ft²/min], tested according to ASTM D-737 under a pressure difference of 1.27cm H₂O at 4°C [½ inch of water] across the insulated composite fabric, and
wherein the insulated composite fabric provides insulation of about 0.2 clo per 33.9 grams per square meter [per ounce per square yard] to about 3.0 clo per 33.9 grams per square meter [per ounce per square yard].

14. The insulated composite fabric of claim 1, wherein the insulating-filler fabric layer (23) is constructed to include face yarn that is positioned generally perpendicular to stitching or backing yarn.

15. The insulated composite fabric of any one of the preceding claims, further comprising a waterproof membrane (540) laminated to an inner surface of the outer fabric layer (22), and disposed between the outer fabric layer (22) and the insulating-filler fabric layer (23), and wherein the waterproof membrane (540) is a vapor permeable membrane, or
wherein the waterproof membrane (540) is selected from a porous hydrophobic membrane, a hydrophilic non-porous membrane, and an electrospun membrane.

16. A fabric garment comprising:
a first fabric portion formed of the insulated composite fabric of one of the claims 1 to 15.

17. The fabric garment of claim 16, further comprising a second fabric portion, wherein the first and second fabric portions have one or more contrasting properties selected from contrasting stretch, contrasting water resistance, contrasting insulative properties, and contrasting air permeability, and wherein the second fabric portion is formed of the insulated composite fabric of one of the claims 1 to 9, 11 and 15.

## Patentansprüche

1. Isolierter Verbundstoff, umfassend:
eine innere Stoffschicht (21);
eine äußere Stoffschicht (22); und
eine isolierende Füllstoffschicht (23), die zwischen der inneren Stoffschicht (21) und der äußeren Stoffschicht (22) eingeschlossen ist,
wobei die isolierende Füllstoffschicht (23) ein Textilstoff mit einer erhöhten Fläche auf mindestens einer Seite des Stoffs ist;
wobei die isolierende Füllstoffschicht (23) eine Florfläche aufweist, die mehrere diskrete Zonen ohne Flor (212a, 212b) umfasst, mit denen Zonen mit Flor (214a, 214b) durchsetzt sind;
**dadurch gekennzeichnet, dass** die isolierende Füllstoffschicht (23) eine Florfläche aufweist, die mehrere erste diskrete Zonen (230) mit einer ersten Florhöhe aufweist, mit denen mehrere andere diskrete Zonen mit einer kontrastierenden Florhöhe durchsetzt sind, die relativ größer ist als die erste Florhöhe.

2. Isolierter Verbundstoff nach Anspruch 1, wobei die isolierende Füllstoffschicht (23) einen Frottee-Platinenschlingenstoff umfasst, bei dem die Frotteeschlinge unerhöht belassen wird.

3. Isolierter Verbundstoff nach Anspruch 2, wobei der Frottee-Platinenschlingenstoff eine umgekehrt geflochtene Ausbildung aufweist.

4. Isolierter Verbundstoff nach Anspruch 3, wobei eine technische Vorderseite des Frottee-Platinenschlingenstoffs eine aufgeraute Oberfläche aufweist und eine technische Rückseite als unaufgeraute Frotteeschlinge belassen wird.

5. Isolierter Verbundstoff nach Anspruch 3, wobei eine technische Vorderseite des Frottee-Platinenschlingenstoffs unaufgeraut belassen wird und eine technische Rückseite als unaufgeraute Frotteeschlinge belassen wird.

6. Isolierter Verbundstoff nach Anspruch 2, wobei der Frottee-Platinenschlingenstoff eine regulär geflochtene Ausbildung aufweist.

7. Isolierter Verbundstoff nach Anspruch 1, wobei die isolierende Füllstoffschicht (23) eine Frottee-Platinenschlingenfläche aufweist, die mehrere diskrete Zonen ohne Frotteeplatinenschlinge umfasst, mit denen Zonen mit Frotteeplatinenschlinge durchsetzt sind.

8. Isolierter Verbundstoff nach einem der vorhergehenden Ansprüche, wobei die isolierende Füllstoffschicht (23) ein Gewicht von etwa 34 Gramm pro Quadratmeter (1 Unze pro Quadratyard) bis etwa 407 Gramm pro Quadratmeter (12 Unzen pro Quadratyard) und eine Dicke (Masse) von etwa 0,25 cm (0,1 Zoll) bis etwa 10,2 cm (4,0 Zoll) aufweist, und
wobei die isolierende Füllstoffschicht (23) eine Isolierung von etwa 0,2 clo pro 33,9 Gramm pro Quadratmeter (pro Unze pro Quadratyard) bis etwa 1,6 clo pro 33,9 Gramm pro Quadratmeter (pro Unze pro Quadratyard) vorsieht.

9. Isolierter Verbundstoff nach einem der vorhergehenden Ansprüche, wobei die isolierende Füllstoffschicht (23) an eine oder beide von der inneren Stoffschicht (21) und der äußeren Stoffschicht (22) gesteppt ist.

10. Isolierter Verbundstoff nach einem der Ansprüche 1 bis 9, wobei die isolierende Füllstoffschicht (23) an eine oder beide von der inneren Stoffschicht (21) und der äußeren Stoffschicht (22) entlang einem Umfang des isolierten Verbundstoffs genäht ist.

11. Isolierter Verbundstoff nach Anspruch 1, wobei Garne, welche die ersten diskreten Zonen (230) bilden, relativ feiner sind als Garne, welche die anderen diskreten Zonen bilden, oder
wobei Garne, welche die ersten diskreten Zonen (230) bilden, einen Denierwert pro Filament (dpf) von weniger als 1,0 aufweisen.

12. Isolierter Verbundstoff nach einem der vorhergehenden Ansprüche, wobei die innere Stoffschicht (21) eine Luftpermeabilität aufweist, die von einer Luftpermeabilität der äußeren Stoffschicht (22) verschieden ist, und wobei die innere Stoffschicht (21) eine Luftpermeabilität aufweist, die relativ größer ist als eine Luftpermeabilität der äußeren Stoffschicht (22), oder
wobei die innere Stoffschicht (21) eine Luftpermeabilität aufweist, die relativ kleiner ist als eine Luftpermeabilität der äußeren Stoffschicht (22).

13. Isolierter Verbundstoff nach einem der vorhergehenden Ansprüche, wobei der isolierte Verbundstoff eine Luftpermeabilität von etwa 5,1 1/m²/s bei 125 Pa bis etwa 1.524 1/m²/s bei 125 Pa (etwa 1,0 ft³/ft²/min bis etwa 300 ft³/ft²/min) aufweist, getestet gemäß ASTM D-737 unter einer Druckdifferenz von 1,27 cm H₂O bei 4°C (1/2 Zoll Wasser) quer über den isolierten Verbundstoff, und
wobei der isolierte Verbundstoff eine Isolierung von etwa 0,2 clo pro 33,9 Gramm pro Quadratmeter (pro Unze pro Quadratyard) bis etwa 3,0 clo pro 33,9 Gramm pro Quadratmeter (pro Unze pro Quadratyard) vorsieht.

14. Isolierter Verbundstoff nach Anspruch 1, wobei die isolierende Füllstoffschicht (23) ausgebildet ist, Polgarn zu umfassen, das allgemein senkrecht zu Näh- oder Stützgarn positioniert ist.

15. Isolierter Verbundstoff nach einem der vorhergehenden Ansprüche, ferner umfassend eine wasserdichte Membran (540), die an eine Innenfläche der äußeren Stoffschicht (22) laminiert und zwischen der äußeren Stoffschicht (22) und der isolierenden Füllstoffschicht (23) angeordnet ist, und wobei die wasserdichte Membran (540) eine dampfpermeable Membran ist, oder
wobei die wasserdichte Membran (540) aus einer porösen hydrophoben Membran, einer hydrophilen nicht-porösen Membran und einer elektrogesponnenen Membran ausgewählt ist.

16. Stoffkleidungsstück, umfassend:
einen ersten Stoffteil, der aus dem isolierten Verbundstoff nach einem der Ansprüche 1 bis 15 gebildet ist.

17. Stoffkleidungsstück nach Anspruch 16, ferner umfassend einen zweiten Stoffteil, wobei der erste und zweite Stoffteil eine oder mehrere kontrastierende Eigenschaften aufweisen, die aus kontrastierender Dehnbarkeit, kontrastierender Wasserfestigkeit, kontrastierenden isolierenden Eigenschaften und kontrastierender Luftpermeabilität ausgewählt sind, und wobei der zweite Stoffteil aus dem isolierten Verbundstoff nach einem der Ansprüche 1 bis 9, 11 und 15 gebildet ist.

## Revendications

1. Tissu composite isolé comprenant :
une couche de tissu interne (21) ;
une couche de tissu externe (22) ; et
une couche de tissu de remplissage isolant (23) incluse entre la couche de tissu interne (21) et la couche de tissu externe (22),
dans lequel la couche de tissu de remplissage isolant (23) est un tissu textile ayant une surface surélevée sur au moins un côté du tissu ;
dans lequel la couche de tissu de remplissage isolant (23) a une surface comportant des poils comprenant une pluralité de régions discontinues sans poils (212a, 212b) alternant avec des régions comportant des poils (214a, 214b) ;
**caractérisé en ce que** la couche de tissu de remplissage isolant (23) a une surface comportant des poils comprenant une pluralité de premières régions discontinues (230) ayant une première hauteur de poil alternant avec une pluralité d'autres régions discontinues ayant une hauteur de poil contrastée relativement supérieure à la première hauteur de poil.

2. Tissu composite isolé selon la revendication 1, dans lequel la couche de tissu de remplissage isolant (23) comprend un tissu peluche à poil bouclé dans lequel la boucle de peluche est laissée non redressée.

3. Tissu composite isolé selon la revendication 2, dans lequel le tissu peluche à poil bouclé a une construction à vanisage inversé.

4. Tissu composite isolé selon la revendication 3, dans lequel une face technique du tissu peluche à poil bouclé a une finition grattée et un envers technique est laissé sous la forme d'une boucle de peluche non grattée.

5. Tissu composite isolé selon la revendication 3, dans lequel une face technique du tissu peluche à poil bouclé est laissée non grattée et un envers technique est laissé sous la forme d'une boucle de peluche non grattée.

6. Tissu composite isolé selon la revendication 2, dans lequel le tissu peluche à poil bouclé a une construction à vanisage standard.

7. Tissu composite isolé selon la revendication 1, dans lequel la couche de tissu de remplissage isolant (23) a une surface de peluche à poil bouclé comprenant une pluralité de régions discontinues sans boucles de peluche alternant avec des régions comportant des boucles de peluche.

8. Tissu composite isolé selon l'une quelconque des revendications précédentes, dans lequel la couche de tissu de remplissage isolant (23) a un poids d'environ 34 grammes par mètre carré [1 once par pied carré] à environ 407 grammes par mètre carré [12 onces par pied carré], et une épaisseur (volume) d'environ 0,25 cm [0,1 pouce] à environ 10,2 cm [4,0 pouces] ; et
dans lequel la couche de tissu de remplissage isolant (23) assure une isolation d'environ 0,2 clo par 33,9 grammes par mètre carré [par once par pied carré] à environ 1,6 clo par 33,9 grammes par mètre carré [par once par pied carré].

9. Tissu composite isolé selon l'une quelconque des revendications précédentes, dans lequel la couche de tissu de remplissage isolant (23) est piquée sur l'une de la couche de tissu interne (21) et de la couche de tissu externe (22) ou sur chacune de ces deux couches.

10. Tissu composite isolé selon l'une quelconque des revendications 1 à 9, dans lequel la couche de tissu de remplissage isolant (23) est liée par piqûre à l'une de la couche de tissu interne (21) et de la couche de tissu externe (22) ou à chacune de ces deux couches le long d'une périphérie du tissu composite isolé.

11. Tissu composite isolé selon la revendication 1, dans lequel les fils formant les premières régions discontinues (230) sont relativement plus fins que les fils formant les autres régions discontinues, ou
dans lequel les fils formant les premières régions discontinues (230) ont un denier par filament (dpf) inférieur à 1,0.

12. Tissu composite isolé selon l'une quelconque des revendications précédentes, dans lequel la couche de tissu interne (21) a une perméabilité à l'air qui est différente d'une perméabilité à l'air de la couche de tissu externe (22), et dans lequel la couche de tissu interne (21) a une perméabilité à l'air qui est relativement supérieure à une perméabilité à l'air de la couche de tissu externe (22), ou
dans lequel la couche de tissu interne (21) a une perméabilité à l'air qui est relativement inférieure à une perméabilité à l'air de la couche de tissu externe (22).

13. Tissu composite isolé selon l'une quelconque des revendications précédentes, le tissu composite isolé ayant une perméabilité à l'air d'environ 5,1 1/m²/sec à 125 Pa à environ 1,524 1/m²/sec à 125 Pa [environ 1,0 pied cube/pied carré/minute à environ 300 pieds cubes/pied carré/minute], évaluée par des essais selon ASTM D-737 sous une différence de pression de 1,27cm H₂O à 4 °C [1/2 pouce d'eau] à travers le tissu composite isolé, et
le tissu composite isolé assurant une isolation d'environ 0,2 clo par 33,9 grammes par mètre carré [par once par pied carré] à environ 3,0 clo par 33,9 grammes par mètre carré [par once par pied carré].

14. Tissu composite isolé selon la revendication 1, dans lequel la couche de tissu de remplissage isolant (23) est construite de façon à inclure un fil de face qui est positionné de manière généralement perpendiculaire au fil de piqûre ou au fil envers.

15. Tissu composite isolé selon l'une quelconque des revendications précédentes, comprenant en outre une membrane imperméable à l'eau (540) appliquée par stratification sur une surface interne de la couche de tissu externe (22), et disposée entre la couche de tissu externe (22) et la couche de tissu de remplissage isolant (23), et dans lequel la membrane imperméable à l'eau (540) est une membrane perméable à la vapeur, ou
dans lequel la membrane imperméable à l'eau (540) est choisie parmi une membrane hydrophobe poreuse, une membrane non poreuse hydrophile, et une membrane filée par filage électrostatique.

16. Vêtement en tissu comprenant :
une première partie en tissu formée du tissu composite isolé selon l'une des revendications 1 à 15.

17. Vêtement en tissu selon la revendication 16, comprenant en outre une deuxième partie en tissu, dans lequel les première et deuxième parties en tissu ont une ou plusieurs propriétés contrastées sélectionnées parmi une extensibilité contrastée, une résistance à l'eau contrastée, des propriétés isolantes contrastées, et une perméabilité à l'air contrastée, et dans lequel la deuxième partie en tissu est constituée du tissu composite isolé selon l'une des revendications 1 à 9, 11 et 15.
